(19) **Europäisches Patentamt / European Patent Office / Office européen des brevets**

(11) **EP 4 231 387 A1**

(12) **EUROPEAN PATENT APPLICATION**
published in accordance with Art. 153(4) EPC

(43) Date of publication:
**23.08.2023 Bulletin 2023/34**

(21) Application number: **20957954.9**

(22) Date of filing: **19.10.2020**

(51) International Patent Classification (IPC):
**H01M 4/485** (2010.01)   **H01M 4/62** (2006.01)

(52) Cooperative Patent Classification (CPC):
**Y02E 60/10**

(86) International application number:
**PCT/CN2020/121902**

(87) International publication number:
**WO 2022/082365 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• **CAI, Xiaohu**
  **Ningde, Fujian 352100 (CN)**
• **LIU, Shengqi**
  **Ningde, Fujian 352100 (CN)**
• **HAN, Dongdong**
  **Ningde, Fujian 352100 (CN)**
• **WANG, Kefei**
  **Ningde, Fujian 352100 (CN)**

(74) Representative: **Klunker IP Patentanwälte PartG mbB Destouchesstraße 68 80796 München (DE)**

(54) **POSITIVE ELECTRODE, AND ELECTROCHEMICAL DEVICE AND ELECTRONIC DEVICE COMPRISING SAME**

(57)   This application relates to a positive electrode and an electrochemical apparatus and an electronic apparatus containing the same. This application provides a positive electrode, the positive electrode including a current collector and a positive electrode active substance layer disposed on the current collector, where the positive electrode active substance layer includes a positive electrode active material and graphene; and a ratio $D_v50/D1$ of a particle size $D_v50$ of the positive electrode active material to a sheet diameter $D1$ of the graphene is 0.45-4.5. The positive electrode provided in this application has reduced electronic impedance and increased flexibility, and can alleviate the fracture problem of the positive electrode with a high compacted density.

FIG. 1

EP 4 231 387 A1

**Description**

**TECHNICAL FIELD**

This application relates to the field of energy storage, and specifically to a positive electrode material and an electrochemical apparatus and electronic apparatus containing the same, especially a secondary lithium battery with a high energy density.

**BACKGROUND**

With the development of the lithium-ion battery industry, the market has imposed an increasingly high requirements on the kinetic performance and energy density of lithium-ion batteries. Positive electrode materials have different conductivity and their large electronic impedance cause high resistance of batteries. In addition, a positive electrode with a high compacted density may have a brittle fracture problem during folding. There is an urgent need for new lithium-ion batteries in the market to resolve this technical problem.

**SUMMARY**

An embodiment of this application provides a positive electrode in an attempt to resolve at least one problem existing in the related field to at least some extent. In some embodiments of this application, an electrochemical apparatus and an electronic apparatus using the positive electrode are also provided.

In an embodiment, this application provides to a positive electrode, the positive electrode including a current collector and a positive electrode active substance layer disposed on the current collector, where the positive electrode active substance layer includes a positive electrode active material and graphene; and a ratio $D_v50/D1$ of a particle size $D_v50$ of the positive electrode active material to a sheet diameter $D1$ of the graphene is 0.45-4.5.

In some embodiments, a ratio $D_v10/D_v50$ of particle sizes $D_v10$ and $D_v50$ of the positive electrode active material is 0.25-0.5.

In some embodiments, the particle size $D_v50$ of the positive electrode active material is 0.5 $\mu$m-35 $\mu$m.

In some embodiments, a quantity of layers the graphene is n, n being 1-30 and preferably being 7-20.

In some embodiments, the positive electrode active substance layer further includes a granular conductive agent and a particle size $D2$ of the granular conductive agent and the particle size $D_v50$ of the positive electrode active material satisfy $D2/D_v50 < 0.4$.

In some embodiments, the granular conductive agent includes at least one of carbon black, Super P, acetylene black, Ketjen black, or graphite.

In some embodiments, a ratio $D_v99/D1$ of a particle size $D_v99$ of the positive electrode active material to the sheet diameter $D1$ of the graphene is 3.2-4.6.

In some embodiments, a sheet resistance of the positive electrode active substance layer is 0.1 ohm-550 ohm.

In some embodiments, a compacted density of the positive electrode active substance layer is 3.5 g/cc-4.5 g/cc.

In some embodiments, the positive electrode active material includes at least one of a lithium transition metal composite oxide or a lithium-containing transition metal phosphate compound.

In some embodiments, the positive electrode active material includes at least one of lithium cobaltate, lithium nickel cobalt manganate, lithium nickel cobalt aluminate, or lithium iron phosphate.

In some embodiments, based on a total weight of the positive electrode active substance layer, a percentage of the graphene is 0.1wt%-5wt%.

In some embodiments, a coating areal density of the positive electrode active substance layer is 200 mg/1540.25 mm$^2$-330 mg/1540.25 mm$^2$.

In another embodiment, this application provides an electrochemical apparatus, including the positive electrode according to some embodiments of this application.

In another embodiment, this application provides an electronic apparatus including the electrochemical apparatus according to some embodiments of this application.

The positive electrode provided in this application has reduced electronic impedance and increased flexibility, and can alleviate the fracture problem of the positive electrode with a high compacted density.

Additional aspects and advantages of some embodiments of this application will be partially described and shown in the subsequent description or explained through implementation of some embodiments of this application.

**BRIEF DESCRIPTION OF DRAWINGS**

To describe some embodiments of this application, the following briefly describes the accompanying drawings required for describing some embodiments of this application or the prior art. Apparently, the accompanying drawings described below are merely some embodiments of this application. A person skilled in the art may still derive drawings for other embodiments from structures shown in these accompanying drawings.

FIG. 1 is a scanning electron microscope (SEM) image of a positive electrode in example 3 of this application, where straight lines representing sheet diameter lengths of graphene.

FIG. 2 is a SEM image of a positive electrode in example 18 of this application, where graphene is found present around the positive electrode active material particles.

## DETAILED DESCRIPTION

Some embodiments of this application are described in detail below. Some embodiments of this application should not be construed as a limitation on this application.

Quantities, ratios, and other values are sometimes presented in a range format in this specification. It should be understood that such range formats are used for convenience and simplicity and should be flexibly understood as including not only values clearly designated as falling within the range but also all individual values or sub-ranges covered by the range as if each value and sub-range are clearly designated.

In specific embodiments and claims, a list of items connected by the terms "one of", "one piece of", "one kind of" or other similar terms may mean any one of the listed items. For example, if items A and B are listed, the phrase "one of A and B" means only A or only B. In another example, if items A, B, and C are listed, the phrase "one of A, B, and C" means only A, only B, or only C. The item A may contain a single element or a plurality of elements. The item B may contain a single element or a plurality of elements. The item C may contain a single element or a plurality of elements.

In the description of specific embodiments and claims, a list of items preceded by the terms "at least one of", "at least one piece of", "at least one kind of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.

In an embodiment, this application provides an electrochemical apparatus. The electrochemical apparatus includes a positive electrode, a negative electrode, a separator, and an electrolyte.

I. Positive electrode

In some embodiments, this application provides to a positive electrode, the positive electrode including a current collector and a positive electrode active substance layer disposed on the current collector, where the positive electrode active substance layer includes a positive electrode active material and graphene; and a ratio $D_v50/D1$ of a particle size $D_v50$ of the positive electrode active material to a sheet diameter D1 of the graphene is 0.45-4.5.

In some other embodiments, the positive electrode active substance layer is disposed on a surface of the current collector. In some embodiments, the positive electrode active substance layer is disposed on two surfaces of the current collector.

In some embodiments, $D_v50/D1$ is 0.45, 0.5, 0.8, 1, 1.2, 1.5, 1.8, 2.0, 2.3, 2.5, 2.8, 3.0, 3.2, 3.5, 3.7, 4.0, 4.2, 4.5, or within a range defined by any two of these values. In some embodiments, $D_v50/D1$ preferably is 1.0-3.5.

In some embodiments, a ratio $D_v10/D_v50$ of particle sizes $D_v10$ and $D_v50$ of the positive electrode active material is 0.25-0.5. In some embodiments, $D_v10/D_v50$ is 0.25, 0.27, 0.30, 0.32, 0.35, 0.38, 0.40, 0.42, 0.45, 0.48, 0.5, or within a range defined by any two of these values. In some embodiments, $D_v10/D_v50$ preferably is 0.33-0.45.

In some embodiments, the particle size $D_v50$ of the positive electrode active material is 0.5 $\mu$m-35 $\mu$m. In some embodiments, the particle size $D_v50$ of the positive electrode active material is 0.5 $\mu$m, 3 $\mu$m, 5 $\mu$m, 8 $\mu$m, 10 $\mu$m, 12 $\mu$m, 15 $\mu$m, 18 $\mu$m, 20 $\mu$m, 22 $\mu$m, 25 $\mu$m, 28 $\mu$m, 30 $\mu$m, 32 $\mu$m, 35 $\mu$m, or within a range defined by any two of these values. In some embodiments, $D_v50$ preferably is 10 $\mu$m-25 $\mu$m.

In some embodiments, a quantity of layers the graphene is n, n being 1-30. In some embodiments, n is 1, 3, 5, 10, 12, 15, 18, 20, 23, 25, 28, 30, or within a range defined by any two of these values. In some embodiments, n preferably is 7-20.

In some embodiments, the positive electrode active substance layer further includes a granular conductive agent and a particle size D2 of the granular conductive agent and the particle size $D_v50$ of the positive electrode active material satisfy $D2/D_v50 < 0.4$.

In some embodiments, $D2/D_v50$ is 0.02, 0.04, 0.06, 0.08, 0.1, 0.12, 0.15, 0.18, 0.2, 0.23, 0.25, 0.28, 0.3, 0.32, 0.35, 0.38, 0.4, or within a range defined by any two of these values. In some embodiments, $D2/D_v50$ preferably is

0.04-0.25.

In some embodiments, the granular conductive agent includes at least one of carbon black, Super P, acetylene black, Ketjen black, or graphite.

In some embodiments, a ratio $D_V99/D1$ of a particle size $D_V99$ of the positive electrode active material to the sheet diameter D1 of the graphene is 3.2-4.6.

In some embodiments, $D_V99/D1$ is 3.2, 3.5, 3.8, 4.0, 4.2, 4.4, 4.6, or within a range defined by any two of these values.

In some embodiments, a sheet resistance of the positive electrode active substance layer is 0.1 ohm-550 ohm. In some embodiments, the sheet resistance of the positive electrode active substance layer is 0.1 ohm, 1 ohm, 3 ohm, 6 ohm, 8 ohm, 10 ohm, 30 ohm, 60 ohm, 90 ohm, 110 ohm, 120 ohm, 150 ohm, 180 ohm, 200 ohm, 220 ohm, 250 ohm, 280 ohm, 300 ohm, 320 ohm, 350 ohm, 380 ohm, 400 ohm, 420 ohm, 450 ohm, 480 ohm, 500 ohm, 530 ohm, 550 ohm, or within a range defined by any two of these values. In some embodiments, the sheet resistance of the positive electrode active substance layer preferably is 0.1 ohm-10 ohm.

In some embodiments, a compacted density of the positive electrode active substance layer is 3.5 g/cc-4.5 g/cc. In some embodiments, the compacted density of the positive electrode active substance layer is 3.5 g/cc, 3.7 g/cc, 3.9 g/cc, 4.0 g/cc, 4.2 g/cc, 4.4 g/cc, 4.5 g/cc, or within a range defined by any two of these values. In some embodiments, the compacted density of the positive electrode active substance layer preferably is 4.0 g/cc-4.5 g/cc.

The compacted density and ultimate compacted density of the positive electrode active substance layer in this application are defined as follows:

compacted density of positive electrode active substance layer = mass of positive electrode active substance layer per unit area $(g/cm^2)$ / thickness of positive electrode active substance layer (cm). The mass of the positive electrode active substance layer per unit area can be weighed by a balance, and the thickness of the positive electrode active substance layer can be measured by a micrometer.

The ultimate compacted density of the positive electrode active substance layer is a corresponding compacted density of the positive electrode active substance layer when the positive electrode is subjected to the maximum amount of pressure.

In some embodiments, the positive electrode active material includes at least one of a lithium transition metal composite oxide or a lithium-containing transition metal phosphate compound.

In some embodiments, the positive electrode active material includes at least one of lithium cobaltate, lithium nickel cobalt manganate, lithium nickel cobalt aluminate, or lithium iron phosphate.

In some embodiments, based on a total weight of the positive electrode active substance layer, a percentage of the graphene is 0.1wt%-5wt%. In some embodiments, based on the total weight of the positive electrode active substance layer, the percentage of the graphene is 0.1wt%, 0.6wt%, 1wt%, 1.2wt%, 1.5wt%, 1.8wt%, 2.0wt%, 2.2wt%, 2.5wt%, 2.8wt%, 3.0wt%, 3.2wt%, 3.5wt%, 3.8wt%, 4.0wt%, 4.2wt%, 4.5wt%, 4.8wt%, 5wt%, or within a range defined by any two of these values. In some embodiments, the percentage of the graphene preferably is 0.2wt%-1.00wt%.

In some embodiments, a coating areal density of the positive electrode active substance layer is 200 mg/1540.25 $mm^2$-330 mg/1540.25 $mm^2$. In some embodiments, the coating areal density C of the positive electrode active substance layer is 200 mg/1540.25 $mm^2$, 230 mg/1540.25 $mm^2$, 260 mg/1540.25 $mm^2$, 280 mg/1540.25 $mm^2$, 300 mg/1540.25 $mm^2$, 330 mg/1540.25 $mm^2$, or within a range defined by any two of these values.

In some embodiments, the positive electrode active substance layer may be provided in one or more layers, for example, may be 2 layers, 3 layers, 4 layers, 5 layers, or within a layer quantity range defined by any two of these values. In some embodiments, each layer of the multilayer positive electrode active substances may contain the same or different positive electrode active substances.

An electrode (positive or negative) of an electrochemical apparatus (for example, lithium-ion battery) is generally prepared by the following method: mixing an active material, a conductive agent, a thickener, a binder and a solvent, and then applying the resulting slurry mix on a current collector. In addition, a theoretical capacity of the electrochemical apparatus may change with the type of the active substance. As the cycling proceeds, charge/discharge capacity of the electrochemical apparatus generally decreases. This is because electrode interfaces of the electrochemical apparatus change during charging and/or discharging, causing the electrode active substance to fail to play its function.

The inventors of this application have surprisingly found that with the ratio $D_V50/D1$ of the $D_V50$ of the positive electrode active material to the sheet diameter D1 of graphene being controlled within a specified range, the electronic impedance of the positive electrode can be improved and the flexibility of the positive electrode can be increased, thereby avoiding the brittle fracture problem of the positive electrode with a high compacted density.

(1) Positive electrode active material

In this application, the positive electrode active material is not particularly limited in type, provided that metal ions (for example, lithium ions) can be electrochemically absorbed and released. In some embodiments, the positive electrode active material is a substance containing lithium and at least one transition metal. In some embodiments, examples of the positive electrode active material may include but are not limited to a lithium transition metal composite oxide and a lithium-containing transition metal phosphate compound.

In some embodiments, transition metals in the lithium transition metal composite oxide include V, Ti, Cr, Mn, Fe, Co, Ni, Cu, and the like. In some embodiments, the lithium transition metal composite oxide includes a lithium-cobalt composite oxide such as $LiCoO_2$, a lithium-nickel composite oxide such as $LiNiO_2$, a lithium-manganese composite oxide such as $LiMnO_2$, $LiMn_2O_4$, or $Li_2MnO_4$, and a lithium-nickel-manganese-cobalt composite oxide such as $LiNi_{1/3}Mn_{1/3}Co_{1/3}O_2$ or $LiNi_{0.5}Mn_{0.3}Co_{0.2}O_2$, where part of transition metal atoms serving as main bodies of these lithium transition metal composite oxides is substituted with other elements such as Na, K, B, F, Al, Ti, V, Cr, Mn, Fe, Co, Li, Ni, Cu, Zn, Mg, Ga, Zr, Si, Nb, Mo, Sn, and W. Examples of the lithium transition metal composite oxide may include but are not limited to $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, and $LiMn_{1.5}Ni_{0.5}O_4$. Examples of a combination of lithium transition metal composite oxides include but are not limited to a combination of $LiCoO_2$ and $LiMn_2O_4$, where part of Mn in $LiMn_2O_4$ may be substituted with a transition metal (for example, $LiNi_{0.33}Co_{0.33}Mn_{0.33}O_2$) and part of Co in $LiCoO_2$ may be substituted with a transition metal.

In some embodiments, transition metals in the lithium-containing transition metal phosphate compound include V, Ti, Cr, Mn, Fe, Co, Ni, Cu, and the like. In some embodiments, the lithium-containing transition metal phosphate compounds include iron phosphates such as $LiFePO_4$, $Li_3Fe_2(PO_4)_3$, and $LiFeP_2O_7$ and cobalt phosphates such as $LiCoPO_4$, where part of transition metal atoms serving as main bodies of these lithium transition metal phosphate compounds are substituted with other elements such as Al, Ti, V, Cr, Mn, Fe, Co, Li, Ni, Cu, Zn, Mg, Ga, Zr, Nb, and Si.

In some embodiments, a powdery material of lithium transition metal oxide $Li_aM_bO_2$ is used, where $0.9 < a < 1.1$, $0.9 < b < 1.1$, M is dominantly a transition metal selected from Mn, Co, and Ni, and the composition M varies with the particle size.

In some embodiments, in a powdery electrode active material of lithium transition metal oxide $Li_aM_bO_2$, M = $A_ZA'_{Z'}M'_{1-Z-Z'}$, M' = $Mn_xNi_yCo_{1-x-y}$, $0 \le y \le 1$, $0 \le x \le 1$, $0 \le Z+Z' < 0.1$, $Z' < 0.02$, A is selected from at least one of element Al, Mg, Ti, or Cr, or A' is selected from at least one of element F, Cl, S, Zr, Ba, Y, Ca, B, Be, Sn, Sb, Na, or Zn.

In some embodiments, an average composition of the transition metal is M = $Mn_xNi_yCo_{1-x-y}$, where $0.03 < x < 0.35$.

In some embodiments, an average composition of the transition metal is M = $Mn_xNi_yCo_{1-x-y}$, where $0.03 < x$, and $x + y < 0.7$.

In some embodiments, basically all bulk of all particles in a powdery electrode active material of $Li_aM_bO_2$ with a composition-size dependence have a layered crystal structure, larger particles having a composition $Li_aM_bO_2$ where M = $Mn_xNi_yCo_{1-x-y}$ and $x + y < 0.35$, and smaller particles having a composition $Li_aM_bO_2$ where M = $Mn_{x'}Ni_{y'}Co_{1-x'-y'}$, with at least 10% less Co, $(1-x'-y') < 0.9 \times (1 - x - y)$, at least 5% more Mn, and $x'-x > 0.05$. In this way, powders with a composition-size dependence can be obtained, that is, with one component having large particles (for example, distribution is concentrated at $\ge 20$ $\mu$m) and capable of fast bulk diffusion and another component having small particles (for example, distribution is around 5 $\mu$m) and able to ensure safety, thereby providing an electrode active material that combines high cycling stability and high safety with high volumetric energy density and high gravimetric energy density.

In some embodiments, the single particles are basically lithium transition metal oxide, and the single particles have a Co content in the transition metal continuously increasing with the particle size.

In some embodiments, the single particles further contain Mn in the transition metal, and have the Mn content continuously decreasing with the particle size.

In some embodiments, the large particles have a composition near to $LiCoO_2$ allowing for a high Li diffusion constant, thus a sufficient rate performance is achieved. The large particles contribute only a small fraction to the total surface area of the positive electrode. Therefore, the amount of heat evolving from reactions with electrolyte at the surface or in the outer bulk is limited; and as a result, large particles contribute little to poor safety. The small particles have a composition with less Co to achieve enhanced safety. A lower lithium diffusion constant can be tolerated in small particles without significant loss of rate performance due to short length of a solid state diffusion path.

In some embodiments, a preferred composition of the smaller particles contains less Co and more stable elements like Mn. Slower Li bulk diffusion can be tolerated and the surface stability is high. In the cathode active material powder of this application, a preferred composition of the larger particles contains more Co and less Mn because a fast lithium bulk diffusion is required, whereas slightly lower surface stability can be tolerated.

In some embodiments, in the inner bulk of a single particle having a composition $Li_xMO_2$, preferably at least 80 w% of M is cobalt or nickel. In some embodiments, the inner bulk of the particle has a composition near to $LiCoO_2$. The outer bulk is a lithium manganese nickel cobalt oxide.

The powdery electrode active material with a composition and size dependence may be prepared by the following method: depositing at least one transition metal containing precipitate onto seed particles, the seed particles having a different transition metal composition than the precipitate; adding a controlled amount of lithium source; and performing at least one heat treatment, where basically all obtained particles contain a core originating from a seed crystal and completely covered by a layer originating from the precipitate.

(2) Positive electrode current collector

The positive electrode current collector is not particularly limited in type and may be any known material suitable for use as a positive electrode current collector. Examples of the positive electrode current collector may include but are not limited to metal materials such as aluminum, stainless steel, a nickel-plated layer, titanium, and tantalum and carbon materials such as carbon cloth and carbon paper. In some embodiments, the positive electrode current collector is a metal material. In some embodiments, the positive electrode current collector is aluminum.

The positive electrode current collector is not particularly limited in form. When the positive electrode current collector is a metal material, the positive electrode current collector may take forms including but not limited to a metal foil, a metal cylinder, a metal coil, a metal plate, a metal film, a sheet metal mesh, a punched metal, and a foamed metal. When the positive electrode current collector is a carbon material, the positive electrode current collector may take forms including but not limited to a carbon plate, a carbon film, and a carbon cylinder. In some embodiments, the positive electrode current collector is a metal film. In some embodiments, the metal film is a mesh. The thickness of the metal film is not particularly limited. In some embodiments, the thickness of the metal film is greater than 1 $\mu$m, greater than 3 $\mu$m, or greater than 5 $\mu$m. In some embodiments, the thickness of the metal film is less than 1 mm, less than 100 $\mu$m, or less than 50 $\mu$m. In some embodiments, the thickness of the metal film is within a range defined by any two of the foregoing values.

In order to reduce the electronic contact resistance between the positive electrode current collector and the positive electrode active substance layer, the surface of the positive electrode current collector may include a conductive additive. Examples of the conductive additive may include but are not limited to carbon and precious metals such as gold, platinum, and silver.

A thickness ratio of the positive electrode current collector to the positive electrode active substance layer is a ratio of the thickness of the positive electrode active substance layer on one side before the injection of electrolyte to the thickness of the positive electrode current collector, and its value is not particularly limited. In some embodiments, the thickness ratio of the positive electrode current collector to the positive electrode active substance layer is less than 20, less than 15, or less than 10. In some embodiments, the thickness ratio of the positive electrode current collector to the positive electrode active substance layer is greater than 0.5, greater than 0.8, or greater than 1. In some embodiments, the thickness ratio of the positive electrode current collector to the positive electrode active substance layer is within a range defined by any two of the foregoing values. When the thickness ratio of the positive electrode current collector to the positive electrode active substance layer falls within the foregoing range, the heat release of the positive electrode current collector during charging and discharging at high current density can be suppressed, and the capacity of the electrochemical apparatus can be ensured.

II. Negative electrode

The negative electrode includes a negative electrode current collector and a negative electrode active substance layer disposed on one or two surfaces of the negative electrode current collector.

Negative electrode active substance layer

The negative electrode active substance layer includes a negative electrode active material. There may be one or more negative electrode active substance layers, and each of the plurality of the negative electrode active substance layers may contain the same or different negative electrode active materials. The negative electrode active material is any substance capable of reversibly intercalating and deintercalating metal ions such as lithium ions. In some embodiments, a rechargeable capacity of the negative electrode active material is greater than a discharge capacity of the positive electrode active material to prevent lithium metal from unexpectedly precipitating onto the negative electrode during charging.

(1) Carbon material

In some embodiments, the negative electrode active substance layer includes a carbon material.

In some embodiments, the negative electrode active substance layer includes at least one of artificial graphite, natural graphite, mesophase carbon microsphere, soft carbon, hard carbon, or amorphous carbon.

In some embodiments, the carbon material has amorphous carbon on the surface.

In some embodiments, the shape of the carbon material includes but is not limited to fibrous, spherical, granular, and scaly.

In some embodiments, the carbon material has at least one of the following features:

(a) a specific surface area (BET) of less than 5 m$^2$/g; and/or
(b) a median particle size (Dv50) of 5 $\mu$m to 30 $\mu$m.

Specific surface area (BET)

In some embodiments, the carbon material has a specific surface area of less than 5 m$^2$/g. In some embodiments, the carbon material has a specific surface area of less than 3 m$^2$/g. In some embodiments, the carbon material has a specific surface area of less than 1 m$^2$/g. In some embodiments, the carbon material has a specific surface area of greater than 0.1 m$^2$/g. In some embodiments, the carbon material has a specific surface area of less than 0.7 m$^2$/g. In some embodiments, the carbon material has a specific surface area of less than 0.5 m$^2$/g. In some embodiments, the specific surface area of the carbon material is within a range defined by any two of the foregoing values. When the specific surface area of the carbon material falls within the foregoing range, lithium precipitation on the electrode surface can be suppressed, and gas generation resulting from reaction of the negative electrode with the electrolyte can be suppressed.

The porosity of the negative electrode active substance layer may be measured by the following method: an AccuPyc II 1340 true density tester is used for testing. Each sample is measured at least three times, and at least 3 pieces of data are selected to take an average value. The porosity of the negative electrode active substance layer is calculated according to the formula porosity = (V1-V2) / V1$\times$100%, where V1 is the apparent volume, V1 = sample surface area $\times$ sample thickness $\times$ number of samples; and V2 is the true volume.

Median particle size (D$_v$50)

The median particle size (D$_v$50) of the carbon material is a volume-based average particle size obtained by a laser diffraction/scattering method. In some embodiments, the carbon material has a median particle size (D$_v$50) of 5 $\mu$m to 30 $\mu$m. In some embodiments, the carbon material has a median particle size (D$_v$50) of 10 $\mu$m to 25 $\mu$m. In some embodiments, the carbon material has a median particle size (D$_v$50) of 15 $\mu$m to 20 $\mu$m. In some embodiments, the carbon material has a median particle size (D$_v$50) of 1 $\mu$m, 3 $\mu$m, 5 $\mu$m, 7 $\mu$m, 10 $\mu$m, 15 $\mu$m, 20 $\mu$m, 25 $\mu$m, 30 $\mu$m, or within a range defined by any two of the foregoing values. When the median particle size of the carbon material falls within the foregoing range, the irreversible capacity of the electrochemical apparatus is small, and the negative electrode can be easily coated uniformly.

The median particle diameter (D$_v$50) of the carbon material can be measured by using the following method: dispersing a carbon material in a 0.2wt% aqueous solution (10 mL) of polyoxyethylene (20) sorbitan monolaurate, and using a laser diffraction/scattering particle size distribution analyzer (LA-700 manufactured by Horiba) to perform testing.

(2) Other components

Silicon and/or Tin-containing materials

In some embodiments, the negative electrode active substance layer further includes at least one of a silicon-containing material, a tin-containing material, or an alloy material. In some embodiments, the negative electrode active substance layer further includes at least one of a silicon-containing material or a tin-containing material. In some embodiments, the negative electrode active substance layer further includes one or more of a silicon-containing material, a silicon-carbon composite material, a silicon-oxide material, an alloy material, and a lithium-containing metal composite oxide material. In some embodiments, the negative electrode active substance layer further includes other types of negative electrode active substances, for example, one or more materials containing a metal element and a metalloid element capable of forming an alloy with lithium. In some embodiments, examples of the metal element and metalloid element include but are not limited to Mg, B, Al, Ga, In, Si, Ge, Sn, Pb, Bi, Cd, Ag, Zn, Hf, Zr, Y, Pd and Pt. In some embodiments, examples of the metal and metalloid elements include Si, Sn, or a combination thereof. Si and Sn have an excellent capability to deintercalate lithium ions and can provide a high energy density for lithium-ion batteries. In some embodiments, other types of negative electrode active substances may further include one or more of a metal oxide and a polymer compound. In some embodiments, metal oxides include but are not limited to iron oxide, ruthenium oxide, and molybdenum oxide. In some embodiments, the polymer compounds include but are not limited to polyacetylene, polyaniline, and polypyrrole.

Negative electrode conductive material

In some embodiments, the negative electrode active substance layer further includes a negative electrode conductive material, and the conductive material may include any conductive material provided that the conductive material causes no chemical change. Non-limitative examples of the conductive material include a carbon-based material (for example, natural graphite, artificial graphite, carbon black, acetylene black, Ketjen black, or carbon fiber), a conductive polymer (for example, a polyphenylene derivative), and a mixture thereof.

Negative electrode binder

In some embodiments, the negative electrode active substance layer further includes a negative electrode binder. The negative electrode binder may enhance the binding of negative electrode active material particles to each other and the binding between the negative electrode active material and the current collector. The negative electrode binder is not particularly limited in type, provided that its material is stable to the electrolyte or a solvent used in manufacturing of the electrode.

Examples of the negative electrode binder include but are not limited to a resin-based polymer such as polyethylene, polypropylene, polyethylene glycol terephthalate, polymethyl methacrylate, aromatic polyamide, polyimide, cellulose, or nitrocellulose; a rubber polymer such as styrene-butadiene rubber (SBR), isoprene rubber, polybutadiene rubber, fluorine rubber, acrylonitrile·butadiene rubber (NBR), or ethylene·propylene rubber; styrene·butadiene· styrene block copolymer or hydride thereof; a thermoplastic elastomeric polymer such as ethylene·propylene· diene terpolymer (EPDM), styrene·ethylene·butadiene· styrene copolymer, styrene·isoprene·styrene block copolymer or hydride thereof; a soft resinous polymer such as syndiotactic-1,2-polybutadiene, polyvinyl acetate, ethylene·vinyl acetate copolymer, propylene·$\alpha$- olefin copolymer; a fluorine polymer such as polyvinylidene fluoride, polytetrafluoroethylene, fluorinated polyvinylidene fluoride, polytetrafluoroethylene·ethylene copolymer; and a polymer composition having ion conductivity of alkali metal ions (for example, lithium ions). The negative electrode binders may be used alone or in any combination.

In some embodiments, based on a total weight of the negative electrode active substance layer, a percentage of the negative electrode binder is greater than 0.1wt%, greater than 0.5wt%, or greater than 0.6wt%. In some embodiments, based on a total weight of the negative electrode active substance layer, a percentage of the negative electrode binder is less than 20wt%, less than 15wt%, less than 10wt%, or less than 8wt%. In some embodiments, a percentage of the negative electrode binder is within a range defined by any two of the foregoing values. When the percentage of the negative electrode binder falls within the foregoing range, the capacity of the electrochemical apparatus and the strength of the negative electrode can be fully ensured.

In a case in which the negative electrode active substance layer contains a rubber-like polymer (for example, SBR), in some embodiments, based on a total weight of the negative electrode active substance layer, a percentage of the negative electrode binder is greater than 0. 1wt%, greater than 0.5wt%, or greater than 0.6wt%. In some embodiments, based on a total weight of the negative electrode active substance layer, a percentage of the negative electrode binder is less than 5wt%, less than 3wt%, or less than 2wt%. In some embodiments, based on a total weight of the negative electrode active substance layer, a percentage of the negative electrode binder is within a range defined by any two of the foregoing values.

In a case in which the negative electrode active substance layer contains a fluorine polymer (for example, polyvinylidene fluoride), in some embodiments, based on a total weight of the negative electrode active substance layer, a percentage of the negative electrode binder is greater than 1wt%, greater than 2wt%, or greater than 3wt%. In some embodiments, based on a total weight of the negative electrode active substance layer, a percentage of the negative electrode binder is less than 15wt%, less than 10wt%, or less than 8wt%. Based on a total weight of the negative electrode active substance layer, the percentage of the negative electrode binder is within a range defined by any two of the foregoing values.

Solvent

The solvent used for forming the negative electrode slurry is not particularly limited in type, provided that the solvent is capable of dissolving or dispersing the negative electrode active substance, the negative electrode binder, and the thickener and the conductive material used as necessary. In some embodiments, the solvent used for forming the negative electrode slurry may be any one of an aqueous solvent and an organic solvent. Examples of the aqueous solvent may include but are not limited to water and alcohol. Examples of the organic solvent may include but are not limited to N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), toluene, acetone, diethyl ether, hexamethylphosphoramide, dimethyl sulfoxide, benzene, xylene, quinoline, pyridine, methylnaphthalene, and hexane. The solvents may be used alone or in any combination.

Thickener

The thickener is usually used to adjust viscosity of the negative electrode slurry. The thickener is not particularly limited in type, and examples of the thickener may include but are not limited to carboxymethyl cellulose, methyl cellulose, hydroxymethyl cellulose, ethyl cellulose, polyvinyl alcohol, oxidized starch, phosphorylated starch, casein, and salts thereof. The thickener may be used alone or in any combination.

In some embodiments, based on a total weight of the negative electrode active substance layer, a percentage of the thickener is greater than 0.1wt%, greater than 0.5wt%, or greater than 0.6wt%. In some embodiments, based on a total weight of the negative electrode active substance layer, a percentage of the thickener is less than 5wt%, less than 3wt%, or less than 2wt%. When the percentage of the thickener falls within the foregoing range, a decrease in the capacity of the electrochemical apparatus and an increase in the resistance can be suppressed, and good coating of the negative electrode slurry can be ensured.

Surface coating

In some embodiments, the surface of the negative electrode active substance layer may have a substance different from its composition attached. Examples of the surface-attached substance of the negative electrode active substance layer include but are not limited to oxides such as aluminum oxide, silicon dioxide, titanium dioxide, zirconium oxide, magnesium oxide, calcium oxide, boron oxide, antimony oxide, and bismuth oxide; sulphates such as lithium sulfate, sodium sulfate, potassium sulfate, magnesium sulfate, calcium sulfate, and aluminum sulfate; and carbonates such as lithium carbonate, calcium carbonate, and magnesium carbonate.

(3) Percentage of negative electrode active material

In some embodiments, based on a total weight of the negative electrode active substance layer, a percentage of the negative electrode active material is greater than 80wt%, greater than 82wt%, or greater than 84wt%. In some embodiments, based on a total weight of the negative electrode active substance layer, a percentage of the negative electrode active material is less than 99wt% or less than 98wt%. In some embodiments, based on a total weight of the negative electrode active substance layer, a percentage of the negative electrode active material is within a range defined by any two of the foregoing values.

(4) Thickness of negative electrode active substance layer

The thickness of the negative electrode active substance layer is the thickness of the negative electrode active substance layer on any side of a negative electrode current collector. In some embodiments, the thickness of the negative electrode active substance layer is greater than 15 $\mu$m, greater than 20 $\mu$m, or greater than 30 $\mu$m. In some embodiments, the thickness of the negative electrode active substance layer is less than 300 $\mu$m, less than 280 $\mu$m, or less than 250 $\mu$m. In some embodiments, the thickness of the negative electrode active substance layer is within a range defined by any two of the foregoing values.

(5) Density of negative electrode active material

In some embodiments, the density of the negative electrode active material in the negative electrode active substance layer is greater than 1 g/cm$^3$, greater than 1.2 g/cm$^3$, or greater than 1.3 g/cm$^3$. In some embodiments, the density of the negative electrode active material in the negative electrode active substance layer is less than 2.2 g/cm$^3$, less than 2.1 g/cm$^3$, less than 2.0 g/cm$^3$, or less than 1.9 g/cm$^3$. In some embodiments, the density of the negative electrode active material in the negative electrode active substance layer is within a range defined by any two of the foregoing values.

When the density of the negative electrode active material falls within the foregoing range, damages to the negative electrode active substance particles can be prevented, deterioration in properties during charging/discharging at the high current density caused by an increase in an initial irreversible capacity of the electrochemical apparatus or a decrease in permeability of the electrolyte in the vicinity of the interface of the negative electrode current collector/the negative electrode active substance can be suppressed, and a decrease in the capacity of the electrochemical apparatus and an increase in the resistance can be suppressed.

Negative electrode current collector

As a current collector maintaining the negative electrode active material, any current collector known in the prior art may be used. Examples of the negative electrode current collector include but are not limited to metal materials such as aluminum, copper, nickel, stainless steel, and nickel plated steel. In some embodiments, the negative electrode current collector is copper.

In a case that the negative electrode current collector is a metal material, the negative electrode current collector may take forms including but not limited to a metal foil, a metal cylinder, a metal coil, a metal plate, a metal foil, a sheet metal mesh, a punched metal, and a foamed metal. In some embodiments, the negative electrode current collector is a metal film. In some embodiments, the negative electrode current collector is a copper foil. In some embodiments, the negative electrode current collector is a rolled copper foil based on a rolling method or an electrolytic copper foil based on an electrolytic method.

In some embodiments, the thickness of the negative electrode current collector is greater than 1 $\mu$m or greater than 5 $\mu$m. In some embodiments, the thickness of the negative electrode current collector is less than 100 $\mu$m or less than 50 $\mu$m. In some embodiments, the thickness of the negative electrode current collector is within a range defined by any two of the foregoing values.

A thickness ratio of the negative electrode current collector to the negative electrode active substance layer is a ratio of the thickness of the negative electrode active substance layer on one side before the injection of electrolyte to the thickness of the negative electrode current collector, and its value is not particularly limited. In some embodiments, the thickness ratio of the negative electrode current collector to the negative electrode active substance layer is less than 150, less than 20, or less than 10. In some embodiments, the thickness ratio of the negative electrode current collector to the negative electrode active substance layer is greater than 0.1, greater than 0.4, or greater than 1. In some embodiments, the thickness ratio of the negative electrode current collector to the negative electrode active substance layer is within a range defined by any two of the foregoing values. When the thickness ratio of the negative electrode current collector to the negative electrode active substance layer falls within the foregoing range, the capacity of the electrochemical apparatus can be ensured while the heat release of the negative electrode current collector during charging and discharging at high current density can be suppressed.

III. Electrolyte

The electrolyte used in the electrochemical apparatus of this application includes an electrolytic salt and a solvent for dissolving the electrolytic salt. In some embodiments, the electrolyte used in the electrochemical apparatus of this application further includes an additive.

In some embodiments, the electrolyte further contains any non-aqueous solvent that is known in the prior art and that may be used as a solvent for the electrolyte.

In some embodiments, the non-aqueous solvent includes but is not limited to one or more of the following: cyclic carbonate, linear carbonate, cyclic carboxylate, linear carboxylate, cyclic ether, linear ether, a phosphorus-containing organic solvent, a sulfur-containing organic solvent, and an aromatic fluorine-containing solvent.

In some embodiments, examples of the cyclic carbonate may include but are not limited to one or more of the following: ethylene carbonate (EC), propylene carbonate (PC), and butylene carbonate. In some embodiments, the cyclic carbonate has 3 to 6 carbon atoms.

In some embodiments, examples of the linear carbonate may include but are not limited to one or more of the following: dimethyl carbonate, ethyl methyl carbonate, diethyl carbonate (DEC), methyl n-propyl carbonate, ethyl n-propyl carbonate, and dipropyl carbonate. Examples of the linear carbonate substituted with fluorine may include but are not limited to one or more of the following: bis(fluoromethyl) carbonate, bis(difluoromethyl) carbonate, bis (trifluoromethyl) carbonate, bis(2-fluoroethyl) carbonate, bis (2,2-difluoroethyl) carbonate, bis(2,2,2-trifluoroethyl) carbonate, 2-fluoroethyl methyl carbonate, 2,2-difluoroethyl methyl carbonate, and 2,2,2-trifluoroethyl methyl carbonate.

In some embodiments, examples of the cyclic carboxylate may include but are not limited to one or more of the following: $\gamma$-butyrolactone and $\gamma$-valerolactone. In some embodiments, some hydrogen atoms in the cyclic carboxylate may be substituted with fluorine.

In some embodiments, examples of the linear carboxylates may include but are not limited to one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the chain carboxylate may be substituted with fluorine. In some embodiments, examples of the fluorine-substituted linear carboxylate may include but are not limited to methyl trifluoroacetate, ethyl trifluoroacetate, propyl trifluoroacetate, butyl trifluoroacetate, and 2,2,2-trifluoroethyl trifluoroacetate.

In some embodiments, examples of the cyclic ether may include but are not limited to one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, examples of the linear ether may include but are not limited to one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxy ethane, and 1,2-ethoxymethoxyethane.

In some embodiments, examples of the phosphorus-containing organic solvent may include but are not limited to one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris(2,2,2-trifluoroethyl) phosphate, and tris(2,2,3,3,3-pentafluoropropyl) phosphate.

In some embodiments, examples of the sulfur-containing organic solvent may include but are not limited to one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the organic solvent containing sulfur may be substituted with fluorine.

In some embodiments, the aromatic fluorine-containing solvent includes but is not limited to one or more of the following: fluorobenzene, difluorobenzene, trifluorobenzene, tetrafluorobenzene, pentafluorobenzene, hexafluorobenzene, and trifluoromethylbenzene.

In some embodiments, the solvent used in the electrolyte in this application includes cyclic carbonate, chain carbonate, cyclic carboxylate, chain carboxylate, and a combination thereof. In some embodiments, the solvent used in the electrolyte in this application includes at least one of ethylene carbonate, propylene carbonate, diethyl carbonate, ethyl propionate, propyl propionate, propyl acetate, or ethyl acetate. In some embodiments, the solvent used in the electrolyte in this application includes ethylene carbonate, propylene carbonate, diethyl carbonate, ethyl propionate, propyl propionate, γ-butyrolactone, and a combination thereof.

With cyclic carboxylate and/or chain carboxylate added into the electrolyte, the cyclic carboxylate and/or chain carboxylate may form a passivation film on a surface of the electrode to improve the capacity retention rate of the electrochemical apparatus after intermittent charge cycles. In some embodiments, 1% to 60% of the electrolyte is chain carboxylates, cyclic carboxylates, and a combination thereof. In some embodiments, the electrolyte contains ethyl propionate, propyl propionate, γ-butyrolactone, and a combination thereof, and based on a total weight of the electrolyte, a percentage of the combination is 1% to 60%, 10% to 60%, 10% % to 50%, or 20% to 50%. In some embodiments, based on the total weight of the electrolyte, 1% to 60%, 10% to 60%, 20% to 50%, 20% to 40%, or 30% of the electrolyte is propyl propionate.

In some embodiments, examples of the additive may include but are not limited to one or more of the following: fluorocarbonate, carbon-carbon double bond-containing ethylene carbonate, sulfur-oxygen double bond-containing compound, and anhydride.

In some embodiments, based on the total weight of the electrolyte, a percentage of the additive is 0.01% to 15%, 0.1% to 10%, or 1% to 5%.

According to an embodiment of this application, based on a total weight of the electrolyte, the percentage of the propionate is 1.5 to 30 times, 1.5 to 20 times, 2 to 20 times, or 5 to 20 times the percentage of the additive.

In some embodiments, the additive includes one or more fluorocarbonates. During charging/discharging of the lithium-ion battery, the fluorocarbonate may act with the propionate to form a stable protective film on the surface of the negative electrode, to suppress decomposition reaction of the electrolyte.

In some embodiments, the fluoroethylene carbonate has a formula $C=O(OR_1)(OR_2)$, where $R_1$ and $R_2$ each are selected from an alkyl group or haloalkyl group having 1 to 6 carbon atoms. At least one of $R_1$ or $R_2$ is selected from a fluoroalkyl group having 1 to 6 carbon atoms. $R_1$ and $R_2$, optionally together with the atoms to which they are attached, form a 5- to 7-membered ring.

In some embodiments, examples of the fluoroethylene carbonate may include but are not limited to one or more of the following: fluoroethylene carbonate, cis-4,4-difluoroethylene carbonate, trans-4,4-difluoroethylene carbonate, 4,5-difluoroethylene carbonate, 4-fluoro-4-methyl ethylene carbonate, and 4-fluoro-5-methyl ethylene carbonate, trifluoromethyl methyl carbonate, trifluoroethyl methyl carbonate, and ethyl trifluoroethyl carbonate.

In some embodiments, the additive includes one or more carbon-carbon double bond-containing ethylene carbonates. Examples of the carbon-carbon double bond-containing ethylene carbonate may include but are not limited to one or more of the following: vinylidene carbonate, methylvinylidene carbonate, ethylvinylidene carbonate, 1,2-dimethylvinylidene carbonate, 1,2-diethylvinylidene carbonate, fluorovinylidene carbonate, trifluoromethylvinylidene carbonate; vinylethylene carbonate, 1-methyl-2-vinylethylene carbonate, 1-ethyl-2-vinylethylene carbonate, 1-n-propyl-2-vinylethylene carbonate, 1-methyl-2-vinylethylene carbonate, 1,1-divinylethylene carbonate, 1,2-divinylethylene carbonate, 1,1-dimethyl-2-methylene ethylene carbonate, and 1,1-diethyl-2-methylene ethylene carbonate. In some embodiments, the carbon-carbon double bond containing ethylene carbonate includes vinylidene carbonate, and can easily achieve better effects.

In some embodiments, the additive includes one or more sulfur-oxygen double bond-containing compounds. Examples of the sulfur-oxygen double bond-containing compound may include but are not limited to one or more of the following: cyclic sulfate, linear sulfate, linear sulfonate, cyclic sulfonate, linear sulfite, and cyclic sulfite.

Examples of the cyclic sulfate may include but are not limited to one or more of the following: 1,2-ethylene glycol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate, and 1,5-pentanediol sulfate.

Examples of the linear sulfate may include but are not limited to one or more of the following: dimethyl sulfate, ethyl methyl sulfate, and diethyl sulfate.

Examples of the linear sulfonate may include but are not limited to one or more of the following: fluorosulfonate such as methyl fluorosulfonate and ethyl fluorosulfonate, methyl methanesulfonate, ethyl methanesulfonate, butyl dimethanesulfonate, methyl 2-(methanesulfonyloxy) propionate, and ethyl 2-(methanesulfonyloxy) propionate.

Examples of the cyclic sulfonate may include but are not limited to one or more of the following: 1,3-propanesulfonate, 1-fluoro-1,3-propanesulfonate, 2-fluoro-1,3-propanesulfonate, 3-fluoro-1,3-propanesulfonate, 1-methyl-1,3-propanesulfonate, 2-methyl-1,3-propanesulfonate, 3-methyl-1,3-propanesulfonate, 1-propylene-1,3-sulfonate, 2-propylene-1,3-sulfonate, 1-fluoro-1-propylene-1,3-sulfonate, 2-fluoro-1-propyl ene-1,3-sulfonate, 3-fluoro-1-propylene-1,3-sulfonate, 1-fluoro-2-propylene-1,3-sulfonate, 2-fluoro-2-propylene-1,3-sulfonate, 3-fluoro-2-propylene-1,3-sulfonate, 1-methyl-1-propylene-1,3-sulfonate, 2-methyl-1-propylene-1,3-sulfonate, 3-methyl-1-propylene-1,3-sulfonate, 1-methyl-2-propylene-1,3-sulfonate, 2-methyl-2-propylene-1,3-sulfonate, 3-methyl-2-propylene-1,3-sulfonate, 1,4-butane sulfonate, 1,5-pentanesulfonate, methylene disulfonate, and ethylene methane disulfonate.

Examples of the linear sulfite may include but are not limited to one or more of the following: dimethyl sulfite, ethyl methyl sulfite, and diethyl sulfite.

Examples of the cyclic sulfite may include but are not limited to one or more of the following: 1,2-ethylene glycol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite, and 1,5-pentanediol sulfite.

In some embodiments, the additive includes one or more acid anhydrides. Examples of the acid anhydride may include but are not limited to one or more of cyclic phosphoric anhydride, carboxylic anhydride, disulfonic anhydride, and carboxylic acid sulfonic anhydride. Examples of the cyclic phosphoric anhydride may include but are not limited to one or more of trimethylphosphoric acid cyclic anhydride, triethylphosphoric acid cyclic anhydride, and tripropylphosphoric acid cyclic anhydride. Examples of the carboxylic anhydride may include but are not limited to one or more of succinic anhydride, glutaric anhydride, and maleic anhydride. Examples of the disulfonic acid anhydride may include but are not limited to one or more of ethane disulfonic acid anhydride and propane disulfonic acid anhydride. Examples of the carboxylic acid sulfonic anhydride may include but are not limited to one or more of sulfobenzoic anhydride, sulfopropionic anhydride, and sulfobutyric anhydride.

In some embodiments, the additive is a combination of fluorocarbonate and carbon-carbon double bond containing ethylene carbonate. In some embodiments, the additive is a combination of fluorocarbonate and the sulfur-oxygen double bond-containing compound. In some embodiments, the additive is a combination of fluorocarbonate and a compound having 2 to 4 cyano groups. In some embodiments, the additive is a combination of fluorocarbonate and cyclic carboxylate. In some embodiments, the additive is a combination of fluorocarbonate and cyclic phosphoric anhydride. In some embodiments, the additive is a combination of fluorocarbonate and phosphoric anhydride. In some embodiments, the additive is a combination of fluorocarbonate and sulfonic anhydride. In some embodiments, the additive is a combination of fluorocarbonate and carboxylic acid sulfonic anhydride.

The electrolytic salt is not particularly limited. Any substances commonly known as electrolytic salts can be used. For lithium secondary batteries, lithium salts are typically used. Examples of the electrolytic salts may include but are not limited to inorganic lithium salts such as $LiPF_6$, $LiBF_4$, $LiClO_4$, $LiAlF_4$, $LiSbF_6$, $LiTaF_6$, and $LiWF_7$; lithium tungstates such as $LiWOFs$; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato)phosphate salts such as lithium tris(malonato)phosphate, lithium difluorobis(malonato)phosphate, and lithium tetrafluoro(malonato)phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In some embodiments, the electrolytic salt is selected from $LiPF_6$, $LiSbF_6$, $LiTaF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, $LiC(FSO_2)_3$, $LiC(CF_3SO_2)_3$, $LiC(C_2F_5SO_2)_3$, $LiBF_3CF_3$, $LiBF_3C_2F_5$,

$LiPF_3(CF_3)_3$, $LiPF_3(C_2F_5)_3$, lithium difluorooxalatoborate, lithium bis(oxalato)borate, or lithium difluorobis(oxalato)phosphate, which helps improve characteristics of the electrochemical apparatus such as output power, high-rate charge/discharge, high-temperature storage, and cycling characteristics.

The concentration of the electrolytic salt is not particularly limited, provided that the effects of this application are not impaired. In some embodiments, the total molar concentration of lithium in the electrolyte is greater than or equal to 0.3 mol/L, greater than 0.4 mol/L, or greater than 0.5 mol/L. In some embodiments, the total molar concentration of lithium in the electrolyte is less than 3 mol/L, less than 2.5 mol/L, or less than or equal to 2.0 mol/L. In some embodiments, the total molar concentration of lithium in the electrolyte is within a range defined by any two of the foregoing values. When the concentration of the electrolyte falls within the foregoing range, the amount of lithium as charged particles would not be excessively small, and the viscosity can be controlled within an appropriate range, thereby ensuring good conductivity.

When two or more electrolytic salts are used, the electrolytic salts include at least one salt selected from a group consisting of monofluorophosphate, borate, oxalate, and fluorosulfonate. In some embodiments, the electrolytic salt includes a salt selected from a group consisting of monofluorophosphate, oxalate, and fluorosulfonate. In some embodiments, the electrolytic salt includes a lithium salt. In some embodiments, based on a total weight of the electrolytic salts, a percentage of the salt selected from the group consisting of monofluorophosphate, borate, oxalate, and fluorosulfonate is greater than 0.01% or greater than 0.1%. In some embodiments, based on the total weight of the electrolytic salts, a percentage of the salt selected from the group consisting of monofluorophosphate, borate, oxalate, and fluorosulfonate is less than 20% or less than 10%. In some embodiments, the percentage of the salt selected from the group consisting of monofluorophosphate, borate, oxalate, and fluorosulfonate is within a range defined by any two of the foregoing values.

In some embodiments, the electrolytic salt includes one or more substances selected from the group consisting of monofluorophosphate, borate, oxalate, and fluorosulfonate and one or more salts different from the one or more substances. The salt different from the more than one substance may include lithium salts exemplified above and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, and $LiPF_3(C_2F_5)_3$. In some embodiments, the other salt is $LiPF_6$.

In some embodiments, based on the total weight of the electrolytic salts, the percentage of the salt different from the more than one substance is greater than 0.01% or greater than 0.1%. In some embodiments, based on the total weight of the electrolytic salts, the percentage of the salt different from the more than one substance is less than 20%, less than 15%, or less than 10%. In some embodiments, the percentage of the salt different from the more than one substance is within a range defined by any two of the foregoing values. The salt different from the more than one substance and of the foregoing percentage helps balance the conductivity and viscosity of the electrolyte.

In the electrolyte, in addition to the foregoing solvent, additive, and electrolytic salt, additives such as a negative electrode film forming agent, a positive electrode protection agent, and an overcharge prevention agent may be included as necessary. For the additive, an additive typically used in non-aqueous electrolyte secondary batteries may be used, and examples thereof may include but are not limited to vinylidene carbonate, succinic anhydride, biphenyls, cyclohexylbenzene, 2,4-difluoroanisole, propane sulfonate, and propylene sulfonate. These additives may be used alone or in any combination. In addition, a percentage of these additives in the electrolyte is not particularly limited and may be set as appropriate according to the types of the additives and the like. In some embodiments, based on the total weight of the electrolytic salts, the amount of the additive is less than 5%, within a range of 0.01% to 5%, or within a range of 0.2% to 5%.

IV Separator

To prevent short circuit, a separator is typically provided between the positive electrode and the negative electrode. In this case, the electrolyte of this application typically permeates the separator for use.

The material and shape of the separator are not particularly limited, provided that the separator does not significantly impair the effects of this application. The separator may be a resin, glass fiber, inorganic substance, or the like that is formed of a material stable to the electrolyte of this application. In some embodiments, the separator includes a porous sheet or nonwoven fabric-like substance having an excellent fluid retention property, or the like. Examples of the material of the resin or glass fiber separator may include but are not limited to polyolefin, aromatic polyamide, polytetrafluoroethylene, polyethersulfone, and glass filter. In some embodiments, the material of the separator is glass filter. In some embodiments, the polyolefin is polyethylene or polypropylene. In some embodiments, the polyolefin is polypropylene. The material of the separator may be used alone or in any combination.

The separator may alternatively be a material formed by laminating the foregoing materials, and examples thereof include but are not limited to a three-layer separator formed by laminating polypropylene, polyethylene, and polypropylene in order.

Examples of the material of the inorganic substance may include but are not limited to oxides such as aluminum oxide and silicon dioxide, nitrides such as aluminum nitride and silicon nitride, and sulfates (for example, barium sulfate and calcium sulfate). The form of the inorganic substance may include but is not limited to a granular or fibrous form.

The form of the separator may be a thin-film form, and examples thereof include but are not limited to a non-woven fabric, a woven fabric, and a microporous film. In the thin-film form, the separator has a pore diameter of 0.01 $\mu$m to 1 $\mu$m and a thickness of 5 $\mu$m to 50 $\mu$m. In addition to the standalone thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with alumina particles of which 90% have a particle size less than 1 $\mu$m.

The thickness of the separator is random. In some embodiments, the thickness of the separator is greater than 1 $\mu$m, greater than 5 $\mu$m, or greater than 8 $\mu$m. In some embodiments, the thickness of the separator is less than 50 $\mu$m, less than 40 $\mu$m, or less than 30 $\mu$m. In some embodiments, the thickness of the separator is within a range defined by any two of the foregoing values. When the thickness of the separator falls within the foregoing range, its insulation performance and mechanical strength can be ensured, helping the rate performance and energy density of the electrochemical apparatus.

When a porous material such as a porous sheet or a nonwoven fabric is used as the separator, the porosity of the separator is random. In some embodiments, the porosity of the separator is greater than 20%, greater than 35%, or greater than 45%. In some embodiments, the porosity of the separator is less than 90%, less than 85%, or less than 75%. In some embodiments, the porosity of the separator is within a range defined by any two of the foregoing values. When the porosity of the separator falls within the foregoing range, the insulation performance and the mechanical strength can be ensured and the film resistance can be suppressed, so that the electrochemical apparatus has good rate performance.

The average pore diameter of the separator is also random. In some embodiments, the average pore diameter of the separator is less than 0.5 $\mu$m or less than 0.2 $\mu$m. In some embodiments, the average pore diameter of the separator is greater than 0.05 $\mu$m. In some embodiments, the average pore diameter of the separator is within a range defined by any two of the foregoing values. If the average pore diameter of the separator exceeds the foregoing range, a short circuit is likely to occur. When the average pore diameter of the separator falls within the foregoing range, the film resistance can be suppressed while the short circuit is prevented, so that the electrochemical apparatus has good rate performance.

**V. Components of electrochemical apparatus**

The components of the electrochemical apparatus include an electrode assembly, a collector structure, an outer packing case, and a protective unit.

Electrode assembly

The electrode assembly may be any one of a laminated structure in which the positive electrode and the negative electrode are laminated with the separator interposed therebetween, and a structure in which the positive electrode and the negative electrode are wound in a swirl shape with the separator interposed therebetween. In some embodiments, a mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly is within a range defined by any two of the foregoing values. When the occupancy of the electrode assembly falls within the foregoing range, the capacity of the electrochemical apparatus can be ensured, degradation of repeated charge/discharge performance and high temperature storage property caused by an increasing internal pressure can be suppressed, and thereby action of a gas release valve can be prevented.

Collector structure

The collector structure is not particularly limited. In some embodiments, the collector structure is a structure that helps reduce the resistance of wiring portions and bonding portions. When the electrode assembly is the foregoing laminated structure, a structure in which metal core portions of the electrode layers are bundled and welded to terminals can be used. An increase in an electrode area causes a higher internal resistance; therefore, it is also acceptable that two or more terminals are provided in the electrode to decrease the resistance. When the electrode assembly has the foregoing winding structure, two or more lead structures are provided at each of the positive electrode and the negative electrode, and are bundled at the terminals, so as to reduce the internal resistance.

Outer packing case

The material of the outer packing case is not particularly limited, provided that the material is a substance stable to the electrolyte in use. The outer packing case may use, but is not limited to a nickel-plated steel plate, stainless steel, metals such as aluminum, aluminum alloy, or magnesium alloy, or laminated films of resin and aluminum foil. In some embodiments, the outer packing case is made of metal including aluminum or an aluminum alloy, or is made of a laminated film.

The metal outer packing case includes but is not limited to a sealed packaging structure formed by depositing metal through laser welding, resistance welding, or ultrasonic welding; or a riveting structure formed by using the foregoing metal or the like with a resin pad disposed therebetween. The outer packing case using the laminated film includes but is not limited to a sealed packaging structure formed by thermally adhering resin layers. In order to improve the sealing property, a resin different from the resin used in the laminated film may be sandwiched between the resin layers. When the sealed structure is formed by thermally adhering the resin layers through current collecting terminals, a resin having a polar group or a modified resin into which a polar group is introduced may be used as the sandwiched resin in consideration of the bonding of metal and resin. In addition, the outer packing case may be in any random shape. For example, it may have any one of a cylindrical shape, a square shape, a laminated form, a button form, a large form, or the like.

Protective unit

The protection unit may use a positive temperature coefficient (PTC), a temperature fuse, or a thermistor whose resistance increases during abnormal heat release or excessive current flows, a valve (current cutoff valve) for cutting off a current flowing in a circuit by sharply increasing an internal pressure or an internal temperature of a battery during abnormal heat release, or the like. The protection unit may be selected from elements that do not operate in conventional high-current use scenarios, or such design may be used that abnormal heat release or thermal runaway does not occur even without a protection unit.

## VI. Application

The electrochemical apparatus according to this application includes any apparatus in which electrochemical reactions take place. Specific examples of the apparatus include all kinds of primary batteries, secondary batteries, fuel batteries, solar batteries, or capacitors. Especially, the electrochemical apparatus is a lithium secondary battery, including a lithium metal secondary battery, a lithium-ion secondary battery, a lithium polymer secondary battery, or a lithium-ion polymer secondary battery.

This application also provides an electronic apparatus, including the electrochemical apparatus according to this application.

A purpose of the electrochemical apparatus according to this application is not particularly limited. It can be used for any known electronic apparatus in the prior art. In some embodiments, the electrochemical apparatus of this application may be used for, without limitation, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following uses a lithium-ion battery as an example and describes preparation of a lithium-ion battery with reference to specific examples. Those skilled in the art understand that the preparation method described in this application is only an example and that all other suitable preparation methods fall within the scope of this application.

Example

The following describes performance evaluation performed based on examples and comparative examples of the lithium-ion battery in this application.

I. Preparation of lithium-ion battery

1. Preparation of positive electrode

(1) Preparation of positive electrodes in examples 1 to 28 and 35 to 39 and comparative examples 1 to 13

The binder polyvinylidene fluoride (PVDF) was added to N-methylpyrrolidone (NMP) to produce glue (solid content 7%). After mixing was completed, a positive electrode active substance lithium cobaltate (LCO) was added and stirred for some time, and then a graphene slurry (dispersing graphene flakes evenly in N-methylpyrrolidone according to 5% solid content to obtain a graphene slurry) was added. After stirring was performed continuously using a vacuum stirrer until the system was uniform, a positive electrode slurry having a solid content of 75% was obtained. A mass ratio of the components was LCO: binder = 96:2. The positive electrode slurry was applied onto an aluminum foil of 12 $\mu$m, followed by drying and cold pressing, to obtain a positive electrode active substance layer, and then cutting was performed and tabs are welded to obtain a positive electrode. Based on a total weight of the positive electrode active substance layer, a percentage of the graphene is W.
Positive electrodes were designed according to the conditions of the examples and comparative examples in the following tables to have corresponding compositions and parameters.

(2) Preparation of positive electrodes in examples 29 to 34

The preparation of positive electrodes in examples 29 to 34 was similar to preparation of positive electrode in example 5, except that in examples 29 to 34, the binder polyvinylidene fluoride (PVDF) and the granular conductive agent Super P were together added to N-methylpyrrolidone to produce glue.

2. Preparation of negative electrode

Artificial graphite, styrene-butadiene rubber, and sodium carboxymethylcellulose were mixed based on a mass ratio of 96%:2%:2% in deionized water. The mixture was stirred evenly to obtain a negative electrode slurry. The negative electrode slurry was applied onto a copper foil of 12 $\mu$m. After steps of drying, cold pressing, cutting, and tab welding, a negative electrode was obtained.

3. Preparation of electrolyte

In a dry argon environment, ethylene carbonate (EC), propylene carbonate (PC), ethyl methyl carbonate (EMC), and diethyl carbonate (DEC) were mixed (based on a weight ratio of 1:1:1), added with $LiPF_6$, and mixed well to obtain an electrolyte, where a concentration of $LiPF_6$ was 1.15 mol/L.

4. Preparation of separator

A polyethylene (PE) porous polymer film was used as the separator.

5. Preparation of lithium-ion battery

The resulting positive electrode, separator, and negative electrode were stacked and wound in order and placed in an outer packing foil, leaving a liquid injection hole. The electrolyte was injected from the liquid injection hole which was then sealed. Then, processes such as formation and capacity were performed to obtain a lithium-ion battery.

II. Test method

1. $D_v10$, $D_v50$, and $D_v99$ test method

(1) Start up a device: first a sampling system of the device is turned on, then an optical path system and a computer are turned on, and the device was warmed up for 30 minutes;
(2) cleaning of the sampling system: a sampler is filled with water, a rotation speed was adjusted to the maximum cleaning speed for 5 seconds and then was adjusted to 0, and cleaning was repeated for three times to ensure a clean sampler;

(3) after a "Manual Measurement" interface was opened, the material name, refractive index, material type, test time, test counts, and the like were set in sequence;

(4) "Start" was clicked to measure light and background light; and

(5) a positive electrode active material was dispersed in an aqueous solution (10 mL), and a laser diffraction/scattering particle size distribution analyzer (Master Sizer 3000) was used to perform testing. A sample was added to a sample cell, and the shading degree was increased with the amount of sample added. When the shading degree was increased to 8%-12%, the addition of the sample stopped. When the shading degree remained stable (usually no longer fluctuates in 30 seconds), "start" was clicked to start a granularity test. When the test ended, $D_V10$, $D_V50$, and $D_V99$ were obtained. Three parallel samples of each example and comparative example needed to be tested, to calculate average values of $D_V10$, $D_V50$, and $D_V99$ of the three parallel samples, and the average values were used as the $D_V10$, $D_V50$, and $D_V99$ values of the positive electrode active material, respectively.

$D_V10$ represents that a volume percentage of particles smaller than this particle size accounts for 10% of all particles; $D_V50$ represents that a volume percentage of particles smaller than this particle size accounts for 50% of all particles; and $D_V99$ represents that a volume percentage of particles smaller than this particle size accounts for 99% of all particles.

2. Graphene (GN) sheet diameter test method

A positive electrode was spread on a sample test stage; images of the sample were taken through a scanning electron microscope; and image analysis software was used to take SEM images of the positive electrode in each example or comparative example at 3 different positions to obtain three SEM images. Ten graphene were randomly selected form each SEM image, and a ruler was used to measure the longest diameter of each graphene as its sheet diameter. An average value of the sheet diameters of 30 graphene in the three SEM images was calculated to obtain the sheet diameter D1 of graphene.

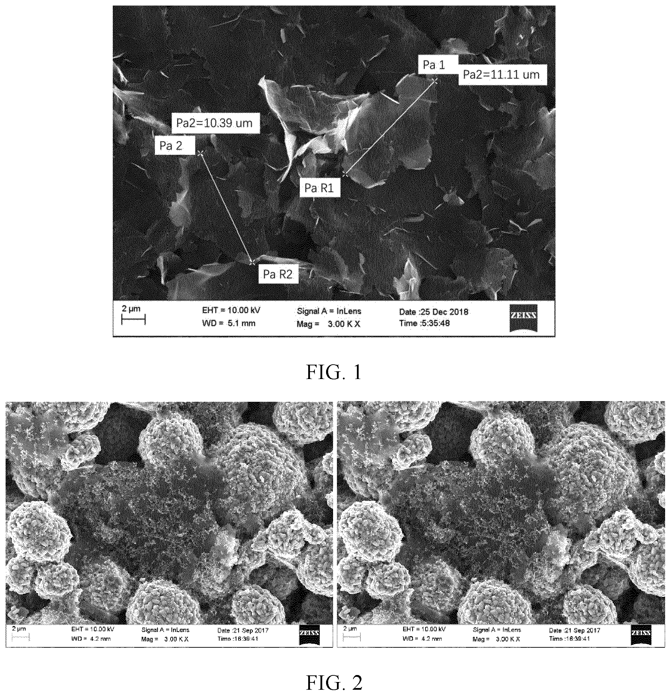

FIG. 1 is a scanning electron microscope (SEM) image of a positive electrode in example 3 of this application, where straight lines representing sheet diameter lengths of graphene.

FIG. 2 is a SEM image of a positive electrode in example 18 of this application, where graphene is found present around the positive electrode active material particles.

3. Method for testing particle size of granular conductive agent

A positive electrode was spread on a sample test stage; images of the sample were taken through a scanning electron microscope; and SEM images of the positive electrode in each example or comparative example at 3 different positions were taken to obtain three SEM images. Image analysis software was used to randomly select 10 particles of the granular conductive agent from each SEM image, and respective areas of these granular conductive agents were solved. Assuming that the granular conductive agents were spherical, respective particle sizes R (diameters) were solved through the following formula:

$$R = 2 \times (S/\pi)^{1/2};$$

where S is the area of the granular conductive agent.

Arithmetic averaging was performed on the particle sizes of the 30 (10×3) granular conductive agents in the three SEM images, to obtain an average particle size D2 of the granular conductive agent.

4. Sheet resistance test method

(1) The sheet resistance test was performed with an IEST device, acting as a sheet resistance meter;

(2) The power supply of the device was maintained at 220 V, and the air pressure was greater than 0.7 MPa;

(3) A positive electrode was taken out when the battery is fully charged, and a cut positive electrode (60*80 mm) was placed flat on a sample stage;

(4) Then the sample stage was placed into the device test chamber and the test started; and

(5) During the whole test process, the test air pressure was set to "0".

5. Adhesion force test method

(1) A dried positive electrode was taken and a sample with a width of 30 mm and a length of 100-160 mm was obtained by using a blade;
(2) A special double-sided adhesive with a width of 20 mm and a length of 90 mm-150 mm was pasted to a steel plate;
(3) The resulting positive electrode sample in step (1) was pasted to the double-sided adhesive, with a test surface facing downward;
(4) A paper tape with a width equal to that of the positive electrode and a length of 80 mm-200 mm greater than that of the sample was inserted below the positive electrode and fastened by using a wrinkle stipple;
(5) A Sunstest tensile machine was powered on, the indicator light was on, and a limit block was adjusted to a suitable position;
(6) The sample prepared in (4) was fixed on the test bench, a speed at 10 mm/min was set, a test range was set to 0-40 mm, and paper pulling started at 90° until the end of the test; and
(7) Test data was saved according to the software prompt, the electrode plate was taken out after the test is completed, and the machine is powered off.

6. Brittle fracture test method

At 25°C and 40% RH, the positive electrodes produced in examples and comparative examples were cold-pressed to a specified compacted density. Then the positive electrode was cut into 20 mm $\times$ 100 mm electrode plates and folded in half, and the folded positive electrode was rolled once with a 2 kg roller. The positive electrode was spread out and observed against the light. If light transmission or a fracture was discovered in a region across 10% or more of the width, the positive electrode brittleness was considered to not meet processing requirements, and this was defined as severe brittle fracture; if light transmission or a fracture was discovered in a region across 10% or less of the width, this was defined as light brittle fracture; and if no light transmission or fracture was found, this was defined as no brittle fracture.

III. Test results

Tables 1-1 and 1-2 show compositions, parameters, and test results of positive electrodes in related examples and comparative examples. $D_v50$ represents $D_v50$ of the positive electrode active material. The sheet resistance reduction ratio in Table 1-2 refers to a reduction ratio of the resistance of an example to the resistance of a comparative example that is different from the example only in that no graphene is added.

## Table 1-1

| No. | $D_v50$ (µm) | Positive electrode active material | GN sheet diameter D1 (µm) | GN layers | GN percentage W (wt%) | $D_v50$/D1 | C.W mg/1540.25 mm$^2$ |
|---|---|---|---|---|---|---|---|
| Example 1 | 5.3 | Lithium cobaltate | 10 | 10 | 0.20 | 0.53 | 300 |
| Example 2 | 10.8 | Lithium cobaltate | 10 | 10 | 0.20 | 1.08 | 300 |
| Example 3 | 15.6 | Lithium cobaltate | 10 | 10 | 0.20 | 1.56 | 300 |
| Example 4 | 15.6 | Lithium cobaltate | 10 | 12 | 0.20 | 1.56 | 300 |
| Example 5 | 15.6 | Lithium cobaltate | 10 | 3 | 0.20 | 1.56 | 300 |
| Example 6 | 15.6 | Lithium cobaltate | 10 | 7 | 0.20 | 1.56 | 300 |
| Example 7 | 15.6 | Lithium cobaltate | 10 | 20 | 0.20 | 1.56 | 300 |
| Example 8 | 15.6 | Lithium cobaltate | 10 | 30 | 0.20 | 1.56 | 300 |
| Example 9 | 21.1 | Lithium cobaltate | 10 | 10 | 0.20 | 2.11 | 300 |
| Example 10 | 21.1 | Lithium cobaltate | 10 | 12 | 0.20 | 2.11 | 300 |
| Example 11 | 15.6 | Lithium cobaltate | 5 | 10 | 0.20 | 3.12 | 300 |

| No. | $D_v50$ (μm) | Positive electrode active material | GN sheet diameter D1 (μm) | GN layers | GN percentage W (wt%) | $D_v50$/D1 | C.W mg/1540.25 mm² |
|---|---|---|---|---|---|---|---|
| Example 12 | 21.1 | Lithium cobaltate | 5 | 10 | 0.20 | 4.22 | 300 |
| Example 13 | 15.6 | Lithium cobaltate | 15 | 10 | 0.20 | 1.04 | 300 |
| Example 14 | 15.6 | Lithium cobaltate | 10 | 10 | 0.50 | 1.56 | 300 |
| Example 15 | 15.6 | Lithium cobaltate | 10 | 10 | 1.00 | 1.56 | 300 |
| Example 16 | 15.6 | Lithium cobaltate | 10 | 10 | 0.20 | 1.56 | 270 |
| Example 17 | 15.6 | Lithium cobaltate | 10 | 10 | 0.20 | 1.56 | 330 |
| Example 18 | 10.7 | Lithium nickel cobalt manganate 811 | 10 | 10 | 0.20 | 1.07 | 200 |
| Example 19 | 4.5 | Lithium nickel cobalt manganate 523 | 10 | 10 | 0.20 | 0.45 | 200 |
| Example 20 | 0.93 | Lithium iron phosphate | 10 | 10 | 0.20 | 0.093 | 300 |
| Example 21 | 5.3 | Lithium cobaltate | 15 | 10 | 0.20 | 0.35 | 300 |
| Comparative example 1 | 5.3 | Lithium cobaltate | / | / | / | / | 300 |
| Comparative example 2 | 10.8 | Lithium cobaltate | / | / | / | / | 300 |
| Comparative example 3 | 15.6 | Lithium cobaltate | / | / | / | / | 300 |
| Comparative example 4 | 21.1 | Lithium cobaltate | / | / | / | / | 300 |
| Comparative example 5 | 10.7 | Lithium nickel cobalt manganate 811 | / | / | / | / | 200 |

| No. | $D_v50$ (μm) | Positive electrode active material | GN sheet diameter D1 (μm) | GN layers | GN percentage W (wt%) | $D_v50/D1$ | C.W mg/1540.25 mm$^2$ |
|---|---|---|---|---|---|---|---|
| Comparative example 6 | 5.3 | Lithium nickel cobalt manganate 523 | / | / | / | / | 200 |
| Comparative example 7 | 0.93 | Lithium iron phosphate | / | / | / | / | 300 |
| Comparative example 8 | 15.6 | Lithium cobaltate | / | / | / | / | 270 |
| Comparative example 9 | 15.6 | Lithium cobaltate | / | / | / | / | 330 |

where "/" indicates that the substance is not present.

**Table 1-2**

| No. | Sheet resistance (ohm) | Sheet resistance reduction ratio | Ultimate compacted density (g/cc) | Brittle fracture | Adhesion force (N/m) |
|---|---|---|---|---|---|
| Example 1 | 549.00 | 51.2% | 4.19 | No | 15.4 |
| Example 2 | 7.44 | 95.0% | 4.25 | No | 16.3 |
| Example 3 | 0.56 | 84.4% | 4.33 | No | 16.8 |
| Example 4 | 0.55 | 84.6% | 4.33 | No | 16.8 |
| Example 5 | 0.72 | 79.89% | 4.25 | Light | 15.6 |
| Example 6 | 0.65 | 81.85% | 4.27 | No | 15.4 |
| Example 7 | 0.53 | 85.20% | 4.28 | No | 15.2 |
| Example 8 | 0.69 | 80.73% | 4.24 | Light | 15.9 |
| Example 9 | 0.28 | 65.3% | 4.25 | No | 16.4 |
| Example 10 | 0.27 | 66.2% | 4.25 | No | 16.4 |
| Example 11 | 1.06 | 70.5% | 4.23 | No | 15.8 |
| Example 12 | 0.42 | 46.2% | 4.23 | Light | 16.4 |
| Example 13 | 1.00 | 72.2% | 4.25 | No | 15.8 |
| Example 14 | 0.31 | 91.3% | 4.21 | No | 15.9 |
| Example 15 | 0.28 | 92.2% | 4.18 | No | 15.9 |
| Example 16 | 0.49 | 82.9% | 4.28 | No | 16.6 |
| Example 17 | 0.69 | 82.0% | 4.25 | No | 15.3 |
| Example 18 | 0.23 | 76.3% | 3.75 | No | 14.8 |

(continued)

| No. | Sheet resistance (ohm) | Sheet resistance reduction ratio | Ultimate compacted density (g/cc) | Brittle fracture | Adhesion force (N/m) |
|---|---|---|---|---|---|
| Example 19 | 0.22 | 75.3% | 3.90 | No | 14.7 |
| Example 20 | 0.64 | 31.2% | 2.40 | Severe | 15.4 |
| Example 21 | 683 | 39.3% | 4.15 | Severe | 15.3 |
| Comparative example 1 | 1126.00 | / | 4.11 | Severe | 15.2 |
| Comparative example 2 | 147.38 | / | 4.2 | Severe | 16.1 |
| Comparative example 3 | 3.58 | / | 4.25 | Severe | 15.6 |
| Comparative example 4 | 0.80 | / | 4.22 | Severe | 16.3 |
| Comparative example 5 | 0.97 | / | 3.65 | Severe | 15.3 |
| Comparative example 6 | 0.89 | / | 3.80 | Severe | 14.8 |
| Comparative example 7 | 0.93 | / | 2.30 | Severe | 14.7 |
| Comparative example 8 | 2.86 | / | 4.25 | Severe | 16.2 |
| Comparative example 9 | 3.83 | / | 4.22 | Severe | 15.1 |

where "/" indicates that there is no such parameter.

It can be learned from the test results in Table 1-2 that:

As compared with the comparative examples, the positive electrodes in examples 1 to 19 have greatly reduced sheet resistance (a magnitude reduction is > 50%) and high compacted density (compacted density is > 3.5 g/cc), without brittle fracture or with light brittle fracture. This is because good distribution of a conductive network between the graphene and the positive electrode active material improves the ability of the electrode to conduct electrons. In addition, the ratio $D_v50/D1$ of the positive electrode active material to graphene being controlled within a specified range can achieve better particle and sheet accumulation, improve the movement between particles, improve the ultimate compacted density of the positive electrode, increase the flexibility of the positive electrode, and avoid the occurrence of severe brittle fracture of the positive electrode with a high compacted density.

It can be learned from examples 1 to 3, 9, 11 to 13, and 16 to 19 that, in a case that the graphene sheet diameter D1 is also 10 $\mu$m, when $D_v50/D1$ is between 0.45 and 4.5, as compared with comparative example 1 with no addition of graphene, the positive electrode has the advantages of reducing sheet resistance by more than 50%, having a high compacted density greater than 3.5 g/cc, and having no brittle fracture. However, it can be learned from examples 20 and 21 that when $D_v50/D1$ is < 0.45, the sheet resistance of the positive electrode is reduced by less than 50% and there is a problem of severe brittle fracture. This is because of two reasons. For one, the graphene sheet diameter is too large compared to the particle size of the active material, the active material particles are agglomerated with each other, the number of interfaces increases, and there is less graphene between the interfaces, so the sheet resistance cannot be significantly reduced. For another, there is no graphene between most of the active material particles, and due to the large sheet diameter, bending of the graphene sheets cannot be done well along gaps among the active material particles, so the sliding effect cannot be provided, resulting in the brittle fracture problem of the electrode plate with a high compacted density.

It can be learned from example 12 that, when $D_v50/D1$ is increased to 4.22, the average particle size $D_v50$ of the active material is too large and the sheet diameter D1 of graphene is too small, resulting in poor accumulation of positive electrode active material particles so that it is difficult for graphene to pass through the gaps among the active material particles to form a good conductive network In addition, increased electrode porosity affects the ion conduction and electron conduction, resulting in a decrease in the magnitude of the sheet resistance reduction. Moreover, graphene with a smaller sheet diameter is agglomerated in the pores between the active material particles and there is less graphene sandwiched between the contact interfaces of the particles, so that the sliding effect cannot be provided during the compaction process, thereby bringing the risk of brittle fracture.

When $D_v50/D1$ is in a range of 1.0-3.5, the positive electrode has a greatly reduced sheet resistance (a magnitude reduction is > 65%) and high compacted density and there is no brittle fracture problem. Further, when the average particle size $D_v50$ of the positive electrode active material is 10 $\mu$m-25 $\mu$m, the sheet resistance is further reduced to 0.2-10 ohm.

It can be learned from examples 3 to 8 that compared to examples 5 and 8 with 3 or 30 layers of GN sheets, the positive electrodes in examples 3 and 4 and 6 and 7 with 7-20 layers of GN sheets have more excellent work brittleness. This is because when the number of GN sheets is small, the sliding effect is weakened, and when the number of sheets is too large, the sheet flexibility is reduced, which is not conducive to bending with the sheets.

As compared with example 3, the amount of graphene used in examples 14 and 15 are increased. The positive electrodes in examples 14 and 15 each further have a significantly reduced sheet resistance, with a magnitude reduction of 90% or more, a high ultimate compacted density, and no brittle fracture problem.

Table 2 shows the influence of the ratio $D_v10/D_v50$ of particle sizes of the positive electrode active material on the ultimate compacted density and work brittleness of the positive electrode.

**Table 2**

| No. | $D_v10$ ($\mu$m) | $D_v50$ ($\mu$m) | $D_v10/D_v50$ | GN sheet diameter D1 ($\mu$m) | GN layers | GN percentage (wt%) | $D_v50/D1$ | Ultimate compacted density (g/cc) | Brittle fracture |
|---|---|---|---|---|---|---|---|---|---|
| Example 22 | 4.0 | 15.6 | 0.26 | 10 | 10 | 0.20 | 1.56 | 4.19 | Light |
| Example 23 | 4.7 | 15.6 | 0.30 | 10 | 10 | 0.20 | 1.56 | 4.23 | No |
| Example 24 | 5.2 | 15.6 | 0.33 | 10 | 10 | 0.20 | 1.56 | 4.28 | No |
| Example 25 | 5.8 | 15.6 | 0.37 | 10 | 10 | 0.20 | 1.56 | 4.33 | No |
| Example 26 | 6.3 | 15.6 | 0.40 | 10 | 10 | 0.20 | 1.56 | 4.29 | No |
| Example 27 | 6.9 | 15.6 | 0.44 | 10 | 10 | 0.20 | 1.56 | 4.25 | No |
| Example 28 | 7.7 | 15.6 | 0.49 | 10 | 10 | 0.20 | 1.56 | 4.21 | Light |

It can be learned from the above results that when $D_v10/D_v50$ is between 0.33 and 0.45, the positive electrode has high ultimate compacted density and flexibility. This is because during the compaction process of the positive electrode, the active material of small particles of appropriate size helps fill the gaps in the active material of large particles, thereby promoting the slippage between active material particles and then increasing the ultimate compacted density. In addition, part of the active material of small particles being filled in the gaps among the active material of large particles and graphene increases the contact area between the active material and graphene, helping fully utilize the sliding effect of graphene and thereby improving the flexibility of the positive electrode.

Table 3 shows the influence of the relationship between the particle size D2 of the granular conductive agent (Super P) added and $D_v50$ of the positive electrode active material on the ultimate compaction and work brittleness of the positive electrode. The percentage of Super P is calculated based on the total weight of the positive electrode active substance layer.

## Table 3

| No. | D2 (μm) | Percentage of Super P (wt%) | $D_v50$ of positive electrode active | Positive electrode active material | D2/$D_v50$ | GN sheet diameter D1 (μm) | GN layers | GN Percentage (wt%) | Ultimate compacted density | Brittleness |
|---|---|---|---|---|---|---|---|---|---|---|
| Example 5 | / | / | 15.6 | Lithium cobaltate | / | 10 | 3 | 0.20 | 4.25 | Light |
| Example 29 | 0.11 | 0.5 | 15.6 | Lithium cobaltate | 0.007 | 10 | 3 | 0.20 | 4.25 | No |
| Example 30 | 0.72 | 0.5 | 15.6 | Lithium cobaltate | 0.046 | 10 | 3 | 0.20 | 4.28 | No |
| Example 31 | 1.9 | 0.5 | 15.6 | Lithium cobaltate | 0.122 | 10 | 3 | 0.20 | 4.33 | No |
| Example 32 | 3.8 | 0.5 | 15.6 | Lithium cobaltate | 0.244 | 10 | 3 | 0.20 | 4.27 | No |
| Example 33 | 6 | 0.5 | 15.6 | Lithium cobaltate | 0.385 | 10 | 3 | 0.20 | 4.23 | No |
| Example 18 | / | / | 10.7 | Lithium nickel cobalt manganate 811 | / | 10 | 10 | 0.20 | 3.65 | Light |
| Example 34 | 1.9 | 0.5 | 10.7 | Lithium nickel cobalt manganate 811 | 0.178 | 10 | 10 | 0.20 | 3.75 | No |

where "/" indicates that the substance is not added.

It can be learned from the above results that in the positive electrode preparation process, when the particle size D2 of the granular conductive agent further added and the particle size $D_v50$ of the positive electrode active material satisfy D2/ Dv50 < 0.4, the work brittleness of the positive electrode can be significantly improved. This is because graphene only exists on the surface of the active material particles and can utilize the sliding effect only when the active material particles are in direct contact with other particles. The granular conductive agent added can be dispersed in the gaps among the active material particles. Therefore, during the compaction process, the conductive agent particles can directly promote sliding of the active material particles in contact therewith, thereby increasing the compacted density and improving the work brittleness. Especially, it can be learned from examples 30 to 32 that when D2/ Dv50 = 0.04-0.25, the positive electrode has a further significantly improved ultimate compacted density. This is because when the conductive agent particles are too small, the gap filling effect is low, so the compacted density is not significantly improved.

However, when the conductive agent particles are too large, the effect of filling the gaps among the active material particles and promoting sliding is weakened, and the compacted density decreases because the density of the conductive agent particles is lower than that of the active material.

Table 4 shows the influence of the ratio $D_V99/D1$ of the graphene sheet diameter D1 to the particle size $D_V99$ of the positive electrode active material on improving the conductivity of the positive electrode, where the sheet resistance reduction ratio is a reduction ratio of the sheet resistance of examples 35 to 39 o the sheet resistance of comparative examples 10 to 14, respectively.

**Table 4**

| No. | $D_V99$ (μm) | GN sheet diameter D1 (μm) | GN layers | GN percentage (wt%) | $D_V99/D1$ | C.W mg/1540.25 mm² | Sheet resistance (ohm) | Sheet resistance reduction ratio |
|---|---|---|---|---|---|---|---|---|
| Example 35 | 25.3 | 10 | 10 | 0.20 | 2.53 | 300 | 2.80 | 67.2% |
| Example 36 | 32.8 | 10 | 10 | 0.20 | 3.28 | 300 | 1.05 | 83.5% |
| Example 37 | 37.9 | 10 | 10 | 0.20 | 3.79 | 300 | 0.56 | 84.4% |
| Example 38 | 45.3 | 10 | 10 | 0.20 | 4.53 | 300 | 0.35 | 76.5% |
| Example 39 | 56.7 | 10 | 10 | 0.20 | 5.67 | 300 | 0.19 | 66.5% |
| Comparative example 10 | 25.3 | / | / | / | / | 300 | 8.54 | / |
| Comparative example 11 | 32.8 | / | / | / | / | 300 | 6.36 | / |
| Comparative example 12 | 37.9 | / | / | / | / | 300 | 3.58 | / |
| Comparative example 13 | 45.3 | / | / | / | / | 300 | 1.49 | / |
| Comparative example 14 | 56.7 | / | / | / | / | 300 | 0.57 | / |

where "/" indicates that the substance is not added.

It can be learned from the above results that when the GN sheet diameter D1 and the particle size $D_V99$ of the active material satisfy $D_V99/D1 = 3.2\text{-}4.6$, the sheet resistance reduction ratio of the positive electrode is greater than 75%. This is because graphene only exists on the surface of the active material particles, and the conductive network among the particles can be formed only when the active material particles are in direct contact with the graphene sheets, to play the role of conducting electrons. As compared with the examples in which $D1/D_V99$ is less than 1/4.6, when $D1/D_V99$ is between 1/3.2 and 1/4.6, the graphene sheet diameter is relatively large so that it can be ensured that graphene extends from a stacking region of the active material with a small particle size. It is known that the active material with a large particle size has a smaller specific surface area, making it easier to connect to the graphene on its surface, thereby forming a good conductive network and significantly improving the sheet resistance of the positive electrode.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, those skilled in the art should understand that the foregoing embodiments are not to be construed as limiting this application, and that some embodiments may be changed, replaced, and modified without departing from the spirit, principle, and scope of this application.

**Claims**

1.　A positive electrode, the positive electrode comprising a current collector and a positive electrode active substance layer disposed on the current collector, wherein the positive electrode active substance layer comprises a positive electrode active material and graphene; and a ratio $D_v50/D1$ of a particle size $D_v50$ of the positive electrode active material to a sheet diameter D1 of the graphene is 0.45-4.5.

2.　The positive electrode according to claim 1, wherein a ratio $D_v10/D_v50$ of particle sizes $D_v10$ and $D_v50$ of the positive electrode active material is 0.25-0.5.

3.　The positive electrode according to claim 1, wherein the particle size $D_v50$ of the positive electrode active material is 0.5 $\mu$m-35 $\mu$m.

4.　The positive electrode according to claim 1, wherein a quantity of layers of the graphene is n, n being 1-30 and preferably being 7-20.

5.　The positive electrode plate according to claim 1, wherein the positive electrode active substance layer further comprises a granular conductive agent and a particle size D2 of the granular conductive agent and the particle size $D_v50$ of the positive electrode active material satisfy $D2/D_v50 < 0.4$.

6.　The positive electrode plate according to claim 5, wherein the granular conductive agent comprises at least one of carbon black, Super P, acetylene black, Ketjen black, or graphite.

7.　The positive electrode plate according to claim 1, wherein a ratio $D_v99/D1$ of a particle size $D_v99$ of the positive electrode active material to the sheet diameter D1 of the graphene is 3.2-4.6.

8.　The positive electrode plate according to claim 1, wherein a sheet resistance of the positive electrode active substance layer is 0.1 ohm-550 ohm.

9.　The positive electrode according to claim 1, wherein a compacted density of the positive electrode active substance layer is 3.5 g/cc-4.5 g/cc.

10.　The positive electrode according to claim 1, wherein the positive electrode active material comprises at least one of a lithium transition metal composite oxide or a lithium-containing transition metal phosphate compound.

11.　The positive electrode according to claim 1, wherein the positive electrode active material comprises at least one of lithium cobaltate, lithium nickel cobalt manganate, lithium nickel cobalt aluminate, or lithium iron phosphate.

12.　The positive electrode according to claim 1, wherein based on a total weight of the positive electrode active substance layer, a percentage of the graphene is 0.1wt%-5wt%.

13.　The positive electrode according to claim 1, wherein a coating areal density of the positive electrode active substance layer is 200 mg/1540.25 mm$^2$-330 mg/1540.25 mm$^2$.

14.　An electrochemical apparatus, comprising the positive electrode according to any one of claims 1 to 13.

15.　An electronic apparatus, comprising the electrochemical apparatus according to claim 14.

FIG. 1

FIG. 2

## INTERNATIONAL SEARCH REPORT

| International application No. |
| --- |
| **PCT/CN2020/121902** |

**A. CLASSIFICATION OF SUBJECT MATTER**

H01M 4/485(2010.01)i;  H01M 4/62(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; EPTXT; WOTXT; USTXT; CNKI: 电池, 正极材料, 石墨烯, 片径, 粒径, D50, battery, cathode material, graphene, diameter, particle size

**C. DOCUMENTS CONSIDERED TO BE RELEVANT**

| Category* | Citation of document, with indication, where appropriate, of the relevant passages | Relevant to claim No. |
| --- | --- | --- |
| X | CN 110190275 A (NINGXIA HANYAO GRAPHENE ENERGY STORAGE MATERIAL SCIENCE AND TECHNOLOGY CO., LTD.) 30 August 2019 (2019-08-30) description paragraphs 22-33, 106 | 1-15 |
| X | CN 107204462 A (GUANGDONG ZHUGUANG NEW ENERGY TECHNOLOGY CO., LTD.) 26 September 2017 (2017-09-26) description paragraphs 2, 6-32, 61 | 1-15 |
| X | CN 110600742 A (AECC BEIJING INSTITUTE OF AERONAUTICAL MATERIALS) 20 December 2019 (2019-12-20) description, paragraphs 3-25 | 1-15 |
| A | CN 110518232 A (CONTEMPORARY AMPEREX TECHNOLOGY LTD.) 29 November 2019 (2019-11-29) entire document | 1-15 |
| A | JP 2020155223 A (ABRI CO LTD) 24 September 2020 (2020-09-24) entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 July 2021** | **20 July 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/121902**

| Patent document cited in search report | | | Publication date (day/month/year) | Patent family member(s) | | | Publication date (day/month/year) |
|---|---|---|---|---|---|---|---|
| CN | 110190275 | A | 30 August 2019 | CN | 110190275 | B | 29 September 2020 |
| CN | 107204462 | A | 26 September 2017 | | None | | |
| CN | 110600742 | A | 20 December 2019 | | None | | |
| CN | 110518232 | A | 29 November 2019 | CN | 110518232 | B | 15 December 2020 |
| | | | | WO | 2020220662 | A1 | 05 November 2020 |
| JP | 2020155223 | A | 24 September 2020 | | None | | |

Form PCT/ISA/210 (patent family annex) (January 2015)